# EUROPÄISCHE PATENTSCHRIFT

(11) **EP 1 389 728 B1**
(45) Veröffentlichungstag und Bekanntmachung des Hinweises auf die Patenterteilung: **15.08.2012**
(21) Anmeldenummer: 03012489.5
(22) Anmeldetag: 02.06.2003
(51) Int. Cl.: G01C 21/36, G09B 29/10, G08G 1/133

(54) **Fahrerinformationsvorrichtung**
Driver information device
Dispositif d'information du chauffeur

(30) Priorität: 06.08.2002 DE 10235889
(43) Veröffentlichungstag der Anmeldung: 18.02.2004
(73) Patentinhaber: ROBERT BOSCH GMBH, 70442 Stuttgart (DE)
(72) Erfinder: Mueller, Ruediger, 31162 Bad Salzdetfurth (DE)

(56) Entgegenhaltungen:
- EP-A- 0 514 887
- EP-A- 0 933 272
- EP-A- 1 195 577
- DE-A- 10 023 160
- DE-A- 19 839 798

## Beschreibung

### Stand der Technik

Die Erfindung geht aus von einer Fahrerinformationsvorrichtung nach der Gattung des Hauptanspruchs. Es sind schon Fahrerinformationsvorrichtungen bekannt, bei denen in einer Anzeigevorrichtung eine Fahrstrecke eines Fahrzeugs von einem Startpunkt zu einem Fahrziel dargestellt wird. Im Allgemeinen wird dabei ein Maßstab der Kartendarstellung derart gewählt, dass sich ein Fahrer einen Überblick über die gesamte Fahrstrecke, zumindest jedoch über den größeren Teil der Fahrstrecke oder eines restlichen Streckenabschnitts bis zu seinem Fahrziel verschaffen kann. Verlangt es der berechnete Fahrweg, dass ein Fahrer die Straße, auf der er sich befindet, verlassen muss, ist es bekannt, entsprechende Fahrhinweise an den Fahrer auszugeben. Zur Unterstützung des Fahrers ist es ferner aus der DE 199 26 367 A1 bekannt, dass in einer Anzeigeeinheit eines Navigationsgerätes der Maßstab einer angezeigten Kartendarstellung derart gewählt wird, dass eine Strecke von einer aktuellen Fahrzeugposition bis zu einem nächsten Entscheidungspunkt, an der ein Fahrer eine gerade benutzte Straße verlassen muss, stets vollständig angezeigt wird. Hierdurch wird ein Fahrer über den nächsten, von ihm vorzunehmenden Abbiegevorgang, mit dem er die gerade befahrene Straße verlässt, durch eine entsprechende Maßstabsanpassung der Karte vorbereitet.

Aus der DE 198 39 798 A1 ist ein Fahrzeugnavigationssystem bekannt, bei dem für den Fall, dass sich das Fahrzeug einer Kreuzung oder einer Abzweigung nähert, die Anzeigevorrichtung zur einer Fahrtenführungskarte umgeschaltet wird, die mittels Hereinzoomen auf die nähere Umgebung der Kreuzung oder Abzweigung erhalten wird.

Aus der DE 100 23 160 A1 ist eine Kartenanzeigevorrichtung bekannt, die einer Routenführungslinie ein perspektivisches Gefühl bzw. Aussehen verleiht, so dass sie leicht betrachtet werden kann, wenn die Gebäude und Straßen dreidimensional angezeigt werden.

### Vorteile der Erfindung

Die erfindungsgemäße Fahrerinformationsvorrichtung mit den Merkmalen des Hauptanspruchs hat demgegenüber den Vorteil, dass der Fahrer auch über Kurven informiert wird, die sich auf der Straße befinden, die er gerade befährt, und die vor seinem nächsten Abbiegepunkt liegen. Denn eine entsprechende Übersichtsdarstellung mit einem damit verbundenen großen Maßstab macht im allgemeinen eine vereinfachte Darstellung einer Karte erforderlich, so dass nicht alle Details des Straßenverlaufs darstellbar sind, um die Ablesbarkeit der Karte zu gewährleisten. Z.B. muss hierbei die Straße gegebenenfalls in der Anzeige breiter dargestellt werden, als es dem Kartenmaßstab entsprechen würde. Hierdurch kann der Straßenverlauf jedoch möglicherweise nicht mehr vollständig realistisch dargestellt werden. Insbesondere enge Kurven können in der Darstellung nicht mehr aufgelöst werden. Hierbei besteht die Gefahr, dass ein Fahrer ausgehend von der Kartendarstellung einer Übersichtskarte der Meinung ist, dass die Straße vor ihm geradeaus weiter verläuft. Dies kann dazu führen, dass er sich mit zu hoher Fahrzeuggeschwindigkeit einer Kurve nähert und damit sich selbst und/oder den Gegenverkehr gefährdet. Wird jedoch die Kartendarstellung des Straßenverlaufs erfindungsgemäß vor der Kurve derart vergrößert dargestellt, dass der Fahrer den Kurvenverlauf erkennen kann, so wird er vor der Kurve gewarnt und wird die Fahrzeuggeschwindigkeit und sein Fahrverhalten entsprechend anpassen. Insbesondere erleichtert dies die Orientierung für einen Fahrer, der vor allem bei schlechten Sichtverhältnissen, z.B. bei Nacht, bei Nebel, oder bei unübersichtlichen Straßenverhältnissen, wie z.B. im Gebirge oder in Wäldern, eine ihm unbekannte Straße benutzt, da er aus der vergrößerten Anzeige bereits den Straßenverlauf, insbesondere eine von ihm in Kürze zu durchfahrende Kurve, entnehmen kann.

Durch die in den Unteransprüchen aufgeführten Maßnahmen sind vorteilhafte Weiterbildungen und Verbesserungen der im Hauptanspruch angegebenen Fahrerinformationsvorrichtung möglich. Besonders vorteilhaft ist, nach dem Durchfahren der Kurve die Karte wieder in dem zuvor eingestellten Maßstab anzuzeigen, um dem Fahrer wieder einen Überblick über die weitere, von ihm noch zurückzulegende Strecke zu geben.

Weiterhin ist vorteilhaft, die Kartendarstellung mit dem vergrößerten Maßstab in einem Fenster in die bisherige Kartendarstellung derart einzublenden, dass die Fahrstrecke, die der Fahrer zu fahren hat, möglichst nicht überdeckt wird. Hierdurch wird eine Ablenkung des Fahrers vermieden, da der zuvor angezeigte Straßenverlauf unverändert angezeigt werden kann.

Es ist ferner vorteilhaft, die ursprüngliche Kartendarstellung unverändert in dem eingestellten Maßstab anzuzeigen, während eine vergrößerte Kartendarstellung in einer zusätzlichen Anzeigeeinheit ausgegeben wird. Die zusätzliche Anzeigeinheit ist dabei vorzugsweise derart im Fahrzeug ausgeführt, dass der Fahrer den Anzeigeninhalt bei einem Blick auf den vor ihm liegenden Fahrweg mit erfassen kann. Die Anzeigeneinheit kann z.B. als eine Anzeige im Kombiinstrument ausgeführt sein oder mittels Einblenden auf die Windschutzscheibe realisiert werden.

Ferner ist vorteilhaft, in einem Kartendatenspeicher die Straßenkarten in vektorieller Form zu speichern. Insbesondere ermöglicht eine Auswertung der vektoriell gespeicherten Straßendaten über einen Winkelvergleich der Vektoren eine einfache Bestimmung des tatsächlichen Kurvenwinkels, so dass nur ein geringer Rechenaufwand für die Auswertung des Kurvenverlaufs erforderlich ist.

Ferner ist vorteilhaft, den Fahrer durch eine geeignete optische und/oder akustische Warnung auf die Maßstabsänderung der Anzeige hinzuweisen. Hiermit wird er zusätzlich auf einen möglichen drohenden Gefahrenpunkt, nämlich die vor dem Fahrzeug liegende Kurve, hingewiesen.

Es ist ferner vorteilhaft, die aktuelle Fahrzeugposition und auch die Fahrzeugrichtung dem Fahrer anzuzeigen, da er hierdurch die Lage seines Fahrzeugs gegenüber der vor ihm liegenden Kurve bereits aus der Anzeige erkennen kann.

### Zeichnung

Ausführungsbeispiele der Erfindung sind in der Zeichnung dargestellt und in der nachfolgenden Beschreibung näher erläutert. Es zeigen
Figur 1 einen schematischen Aufbau einer erfindungsgemäßen Fahrerinformationsvorrichtung,
Figur 2 ein Ausführungsbeispiel für eine Kartendarstellung in einem ersten Maßstab,
Figur 3 ein erstes Ausführungsbeispiel für eine vergrößerte Kartendarstellung,
Figur 4 ein zweites Ausführungsbeispiel für eine vergrößerte Kartendarstellung.

### Beschreibung des Ausführungsbeispiels

Die vorliegende Erfindung kann für beliebige Verkehrsmittel eingesetzt werden, die an Verkehrswege gebunden sind und diesen Verkehrswegen mittels Steuerung durch einen Fahrer folgen müssen. Dies sind vor allem Straßenfahrzeuge, insbesondere Kraftfahrzeuge. Die erfindungsgemäße Fahrerinformationsvorrichtung ist dabei vorzugsweise als eine Navigationsvorrichtung ausgeführt, die eine Berechnung einer Fahrtroute in einem Verkehrswegenetz von einem Startpunkt zu einem eingegebenen Fahrziel ermöglicht, wobei die Verkehrswegedaten zumindest Straßenkartendaten umfassen, die ein Straßen- und Wegenetz repräsentieren.

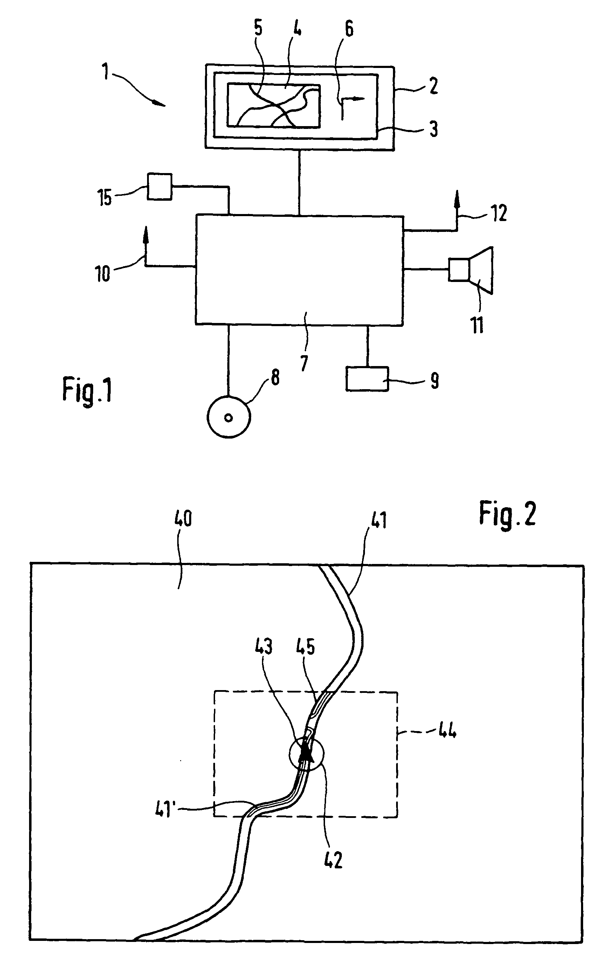

In der Figur 1 ist eine als eine Navigationsvorrichtung ausgeführte Fahrerinformationsvorrichtung 1 dargestellt, die eine Anzeigeeinheit 2 mit einer Anzeigefläche 3 aufweist. In der Anzeigefläche 3 ist eine Kartendarstellung 4 mit Straßen 5 eines Straßen- und Wegenetzes in einem vorgegebenen Maßstab dargestellt, der z.B. von der befahrenen Straßenklasse abhängt, z.B. 1:100.000. Ferner ist ein Fahrhinweis, insbesondere ein Abbiegehinweis 6 in der Anzeigefläche 3 dargestellt. Die Anzeigeeinheit 2 wird von einer Recheneinheit 7 angesteuert, die auf eine Speichereinheit 8 zugreift, insbesondere ein Datenträgerlaufwerk mit einem Datenträger, z.B. einer sogenannten CD-ROM. Die Recheneinheit 7 ist über eine Bedieneinheit 9, z.B. mit Drucktasten, Wipptasten oder Drehregler, steuerbar. Über eine Ortungseinheit 10, vorzugsweise eine Satellitenonungseinheit, ist z.B. mittels des GPS (Global Positioning System) eine aktuelle Position des Fahrzeugs bestimmbar, in das die Fahrerinformationsvorrichtung 1 eingebracht ist. Die Recheneinheit 7 berechnet ausgehend von dieser aktuellen Position eine Fahrtroute zu einem über die Bedieneinheit 9 eingegebenen Fahrziel, wobei sie auf die in der Speichereinheit 8 abgelegten Verkehrswegedaten und insbesondere auf das dort abgelegte Straßen- und Wegenetz zurückgreift. Die Fahrtroute wird in der Kartendarstellung 4 in der Anzeigeeinheit 2 durch Hervorheben entsprechender Straßen 5 angezeigt. Ferner werden Fahrhinweise akustisch über einen Lautsprecher 11 ausgegeben und/oder über in der Anzeigeeinheit 2 dargestellte Abbiegehinweise 6 vorzugsweise in Pfeilform angezeigt. Vorzugsweise weist die Recheneinheit 7 eine Mobilfunkschnittstelle 12 auf, mit der sie einen Funkkontakt zu einer Dienstezentrale herstellen kann. Weitere Verkehrswegedaten können über die Mobilfunkschnittstelle 12 an die Recheneinheit 7 der Fahrerinformationsvorrichtung 1 übertragen werden. In einer weiteren Ausführung kann die Fahrerinformationsvorrichtung 1 auch derart ausgeführt sein, dass keine Routenberechnung erfolgt und lediglich der vor dem Fahrzeug unmittelbar liegende Fahrweg von der Recheneinheit 7 durch Zugriff auf die Speichereinheit 8 in Abhängigkeit von der aktuell über die Ortungseinheit 10 ermittelten Position überwacht wird.

In der Figur 2 ist eine Kartendarstellung 40 angezeigt, wobei in der Kartendarstellung 40 ein Straßenverlauf 41 und die aktuelle Fahrzeugposition 42 eingezeichnet ist. Zudem ist durch einen Pfeil 43 die aktuelle Fahrtrichtung des Fahrzeugs kenntlich gemacht. Für die Kartendarstellung 40 ist ein Maßstab gewählt, der eine Übersichtsbetrachtung des Straßenverlaufs 41 gewährleistet. Unter dem Straßenverlauf ist dabei der Verlauf der Straße zu verstehen, auf der sich das Fahrzeug gerade befindet. Der Straßenverlauf kann dabei deckungsgleich bevorzugt mit einer berechneten Fahrtroute sein, muss dies jedoch nicht. Als helle Auslassung ist in einem gestrichelt gezeichneten Rahmen 44, der in der Anzeigefläche 3 nicht dargestellt wird, ein maßstabsgetreuer Straßenverlauf 41' gegenüber dem angezeigten Straßenverlauf 41 hell hervorgehoben. Eine maßstabsgetreue Darstellung des Straßenverlaufs 41' kann nicht erfolgen, da eine derart dünne Darstellung der Straße für einen Betrachter insbesondere während der Fahrt kaum gegenüber der Umgebung in der Karte erkennbar ist. Möglichweise lässt auch eine maximale Auflösung der Anzeigeeinheit 2 eine entsprechend dünne Darstellung des Straßenverlaufs 41' nicht zu. Daher erfolgt eine, im Bezug zu ihrer tatsächlichen Breite entsprechend dem gewählten Maßstab verbreiterte Darstellung des Straßenverlaufs 41. Hierdurch kann jedoch eine Kurve 45, die nun innerhalb der verbreiterten Darstellung des Straßenverlaufs 41 verläuft, in der Anzeige nicht mehr aufgelöst und damit nicht mehr dargestellt werden. Es entsteht der Eindruck, dass die Straße im Bereich der Kurve 45 geradlinig weiterverläuft. Eine Kurve ist dabei eine Änderung des Straßenverlaufs, dem das Fahrzeug zwingend folgen muss, ohne dass an dieser Stelle weitere Abbiegemöglichkeiten oder Abzweigungen von dem Straßenverlauf bestehen.

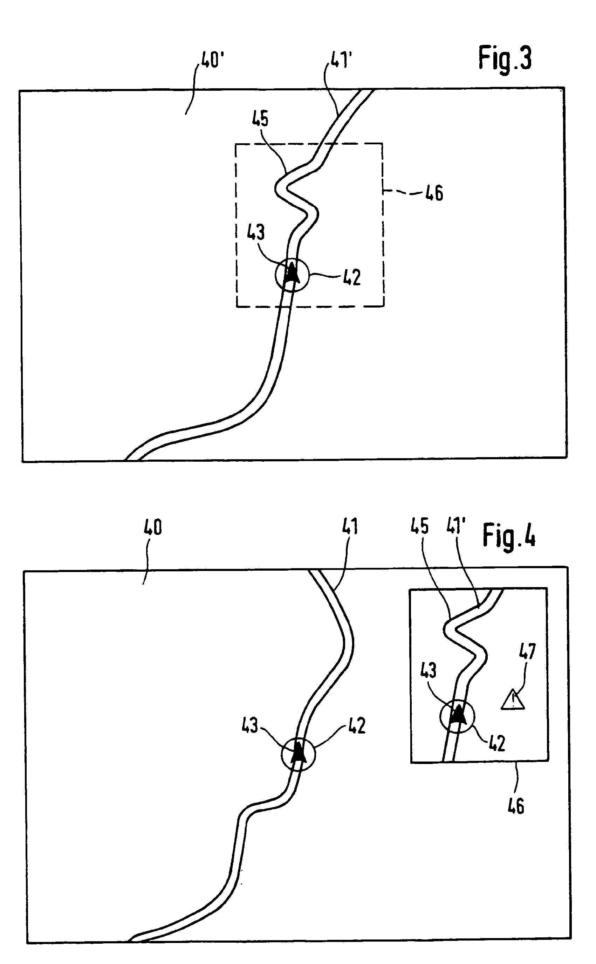

Nähert sich das Fahrzeug der Kurve 45, wird also eine Fahrzeugposition 42 in einem vorgegebenen Abstand vor der Kurve 45 mittels der Ortungseinheit 10 erkannt, z.B. ein Abstand von 300m vor der Kurve, so erfolgt erfindungsgemäß eine Vergrößerung der Kartendarstellung, wobei der in der Figur 2 durch den gestrichelt eingezeichneten Rahmen 44 gekennzeichnete Kartenausschnitt formatfüllend in der Kartendarstellung 40' gemäß der Figur 3 in der Anzeigeeinheit 2 dargestellt wird. In einer möglichen Ausführungsform wird der Straßenverlauf z.B. um den Faktor drei vergrößert dargestellt. Im Bezug auf den Kartenmaßstab wird nunmehr der Straßenverlauf 41' dargestellt, das heißt die Straße wird in ihrer tatsächlichen Breite gemäß dem tatsächlichen Straßenverlauf 41' in der Kartendarstellung 40' angezeigt. Somit ist auch nun die in dem Straßenverlauf vor dem Fahrzeug liegende Kurve 45 für den Fahrer erkennbar. Hat der Fahrer die Kurve 45 durchfahren, wird automatisch wieder der Maßstab eingestellt, in dem die Kartendarstellung 40 gemäß der Figur 2 erfolgt ist. Bei einem Umschalten der Maßstäbe, insbesondere bei einer Vergrößerung des Rahmens 44, erfolgt über den Lautsprecher 11 ein akustisches Warnsignal, z.B. ein Warnton. In einer bevorzugten Ausführung kann von der Recheneinheit 7 auch die Kurvenform analysiert werden, so dass ein akustischer Hinweis hierauf erfolgt. Im Falle der Kurve 45 können z.B. akustische Hinweis in Form der Anweisungen "Achtung S-Kurve" oder "Achtung Serpentine" oder "Achtung gefährliche Kurve" ausgegeben werden.

In einem weiteren Ausrührungsbeispiel wird statt einer Vergrößerung des gesamten Rahmens 44 lediglich ein in der Figur 3 gestrichelt eingezeichneter Ausschnitt 46 gemäß der Figur 4 in die Kartendarstellung 40 der Figur 2 eingeblendet. Der Ausschnitt 46 wird neben dem Straßenverlauf 41 in die Kartendarstellung 40 eingeblendet, so dass der Straßenverlauf 41 unverändert angezeigt werden kann. Der Maßstab in dem Ausschnitt 46 entspricht dabei dem Maßstab gemäß der Kartendarstellung in der Figur 3, so dass eine vergrößerte Darstellung des Straßenverlaufs 41' in dem entsprechenden Ausschnitt 46 erfolgt, wobei der Ausschnitt hierbei auf eine Umgebung um die Kurve beschränkt ist. Außerdem kann zusätzlich ein Warnsymbol 47 in den Ausschnitt 46 mit eingeblendet werden.

In einer weiteren Ausführungsform kann die Kartendarstellung mit dem eingestellten Maßstab unverändert weiter in der Anzeigeeinheit 2 angezeigt werden, während in einer zusätzlichen Anzeigeeinheit 15 eine vergrößerte Kartendarstellung gemäß der Darstellung der Figur 3 oder dem Ausschnitt 46 der Figur 4 angezeigt wird. Die zusätzliche Anzeigeeinheit 15 ist z.B. als eine in ein Kombiinstrument mit einer Vielzahl von Anzeigeeinheiten zur Anzeige von Fahrzeugdaten vor dem Fahrer ausgeführte Anzeigeeinheit ausgeführt, die z.B. zwischen einer in der Zeichnung nicht dargestelltren Geschwindigkeitsskala und einem Drehzahlmesser angeordnet ist. Die zusätzliche Anzeigeeinheit 15 wird sonst für die Anzeige von anderen Warninformationen und Hinweisen verwendet und ist z.B. als eine Flüssigkristallanzeige ausgeführt. In einer weiteren Ausführungsform kann die zusätzliche Anzeigeeinheit 15 auch als ein sogenanntes Head-Up-Display ausgeführt sein, bei dem eine Bilddarstellung insbesondere als ein virtuelles Bild mittels einer Projektion auf die Windschutzscheibe oder auf eine davor angeordnete Projektionsvorrichtung, ein sogenannter Combiner, erfolgt. Der Fahrer hat somit einen Hinweis auf die Straßenführung in der Kurve direkt in seinem Blickfeld. Die vergrößerte Kartendarstellung in der zusätzlichen Anzeigeeinheit 15 wird ebenfalls nur dann aktiviert, wenn eine Kurve 45 unmittelbar vor dem Fahrzeug liegt, so dass der Fahrer hierauf gesondert hingewiesen wird.

In einer bevorzugten Ausführungsform ist der Straßenverlauf 41 in Form einer digitalen Karte in der Speichereinheit 8 vorzugsweise auf einem Datenträger abgelegt. Bevorzugt werden die Straßenverläufe dabei durch aneinandergesetzte Vektoren beschrieben. Je genauer der Straßenverlauf beschrieben ist und je stärker die Straße sich krümmt, desto mehr Vektoren sind zur Beschreibung des Straßenverlaufs erforderlich. Hierbei werden enge Kurven, z.B. Haarnadelkurven aus einer Vielzahl kurzer Vektoren zusammengesetzt, wobei die Winkeländerung zwischen den einzelnen Vektoren im Allgemeinen gering ist, z.B. kleiner als 30°. Zur Erkennung einer Kurve ist es daher nicht ausreichend, nur den Winkel zwischen zwei benachbarten Vektoren zu betrachten. Zum erfindungsgemäßen Erkennen einer engen Kurve ist es vielmehr im Allgemeinen erforderlich, den Betrag der Winkeländerung für einen vorgegebenen Streckenabschnitt, z.B. von 100m, aufzusummieren. Beträgt der Betrag der Winkeländerung auf der Wegstrecke von 100m z.B. mehr als 60°, so gibt es wahrscheinlich mindestens eine gefährliche, enge Kurve auf der Straße vor dem Fahrzeug, so dass eine Vergrößerung der Kartendarstellung vor Erreichen der Kurve erfindungsgemäß erfolgt. Besonders scharfe Kurven können auch dadurch erkannt werden, dass die Winkeländerung zwischen zwei Vektoren des Straßenverlaufs mehr als 60° beträgt.

Der Winkelwert, der für eine Warnung erreicht werden muss, sowie die betrachtete Streckenlänge kann dabei vom Straßentyp abhängig gemacht werden. Während z.B. eine langgezogene Kurve auf einer schmalen Landstraße schon aufgrund der im Allgemeinen dort niedrigen Geschwindigkeit für einen Fahrer keine Gefahr darstellen mag, so kann eine gleiche Winkeländerung auf derselben Streckenlänge bei einer Schnellstraße und der damit verbundenen höheren Geschwindigkeit durchaus eine höhere Aufmerksamkeit des Fahrers an dieser Stelle erfordern. Der Abstand der Warnung vor der Kurve kann dabei sowohl vom Straßentyp, als auch von der aktuellen Fahrzeuggeschwindigkeit vor der Kurve abhängig gemacht werden. In einer weiteren Ausführungsform können auch die Vektoren des Straßenverlaufs mit den Vektoren für die graphische Darstellung des Straßenverlaufs verglichen werden. Entspricht der tatsächliche Straßenverlauf dem angezeigten Straßenverlauf, laufen diese Vektoren nahezu parallel, so dass kein großer Richtungsunterschied besteht. Folgt jedoch der graphische Straßenverlauf der Kurve nicht, wie in der Figur 2 an der Kurve 55, so unterscheiden sich diese Vektoren hinsichtlich ihrer Ausrichtung um mehr als einen vorgegebenen Winkel, z.B. um mehr als 20°. Durch einen Vergleich dieser Vektoren kann also festgestellt werden, ob die Kurve entsprechend dem graphisch dargestellten Straßenverlauf in der Anzeige erkennbar ist oder nicht. In einer weiteren Ausführungsform kann auch in der Speichereinheit 8 zu bestimmten Kurven ein entsprechender Hinweis abgespeichert sein, so dass ohne eine Berechnung der Kurve bzw. ein Vergleich der graphischen Darstellung mit der Kurve eine entsprechend vergrößerte Kartendarstellung erfolgen kann.

## Patentansprüche

1. Fahrerinformationsvorrichtung (1) mit einer Anzeigeeinheit (2) zur Anzeige einer Verkehrswegekarte (4, 40, 40', 46) in verschiedenen Maßstäben, mit einer Ortungseinheit (10) zur Bestimmung der aktuellen Fahrzeugposition und mit einer Recheneinheit (7) zum Auswählen eines Maßstabs der in der Anzeigeeinheit (2) dargestellten Verkehrswegekarte (4, 40, 40', 46) und zum Überwachen eines ausgehend von der aktuellen Position des Fahrzeugs (42) vor dem Fahrzeug liegenden Verkehrswegeverlaufs, **dadurch gekennzeichnet, dass** der Verkehrswegeverlauf von der Recheneinheit derart überwacht wird, dass die Recheneinheit (7) in der Anzeigeeinheit (2) eine vergrößerte Kartendarstellung (40', 46) gegenüber einem eingestellten Maßstab veranlasst, wenn eine Kurve (45) des vor dem Fahrzeug liegenden Verkehrswegeverlaufs bei dem eingestellten Maßstab nicht erkennbar ist und/oder wenn die Kurve einen vorgegebenen Kurvenwinkel überschreitet.

2. Fahrerinformationsvorrichtung nach Anspruch 1, **dadurch gekennzeichnet, dass** nach einem Durchfahren der Kurve (45) die Karte wieder in dem zuvor eingestellten Maßstab angezeigt wird.

3. Fahrerinformationsvorrichtung nach Anspruch 1, **dadurch gekennzeichnet, dass** die Kartendarstellung (46) mit dem vergrößerten Maßstab in die Kartendarstellung (40) oder neben der Kartendarstellung (40) mit dem eingestellten Maßstab zumindest für die Dauer der Kurvendurchfahrt eingeblendet wird.

4. Fahrerinformationsvorrichtung nach einem der Ansprüche 1-2, **dadurch gekennzeichnet, dass** die vergrößerte Kartendarstellung (40', 46) in einer zusätzlichen Anzeigeeinheit (15) zusätzlich zu der Anzeigeeinheit (2) dargestellt ist.

5. Fahrerinformationsvorrichtung nach einem der vorherigen Ansprüche, **gekennzeichnet durch** einen Kartendatenspeicher (8) mit Straßenkartendaten, wobei der Verkehrswegeverlauf zumindest in Form von Vektoren gespeichert ist.

6. Fahrerinformationsvorrichtung nach einem der vorherigen Ansprüche, **gekennzeichnet durch** eine Warnvorrichtung (2, 11) zum Ausgeben einer akustischen und/oder optischen Warnung zusammen mit der Maßstabsänderung.

7. Fahrerinformationsvorrichtung nach einem der vorherigen Ansprüche, **dadurch gekennzeichnet, dass** die Anzeigeeinheit (2) zur Anzeige der aktuellen Fahrzeugposition (42) und der Fahrtrichtung (43) in Bezug auf den Verkehrswegeverlaufausgebildet ist.

## Claims

1. Driver information apparatus (1) having a display unit (2) for displaying a traffic route map (4, 40, 40', 46) on different scales, having a position-finding unit (10) for determining the current vehicle position and having a computation unit (7) for selecting a scale for the traffic route map (4, 40, 40', 46) presented in the display unit (2) and for monitoring a traffic route profile which is situated ahead of the vehicle starting from the current position of the vehicle (42), **characterized in that** the traffic route profile is monitored via the computation unit such that the computation unit (7) prompts an enlarged map presentation (40', 46) in the display unit (2) in comparison with a set scale when a bend (45) in the traffic route profile situated ahead of the vehicle cannot be identified on the set scale and/or when the bend exceeds a prescribed bend angle.

2. Driver information apparatus according to Claim 1, **characterized in that** after the bend (45) has been taken the map is displayed on the previously set scale again.

3. Driver information apparatus according to Claim 1, **characterized in that** the map presentation (46) on the enlarged scale is opened in the map presentation (40) or next to the map presentation (40) on the set scale at least for the period during which the bend is being taken.

4. Driver information apparatus according to one of Claims 1-2, **characterized in that** the enlarged map presentation (40', 46) is presented on an additional display unit (15) in addition to the display unit (2).

5. Driver information apparatus according to one of the preceding claims, **characterized by** a map data memory (8) with road map data, wherein the traffic route profile is stored at least in the form of vectors.

6. Driver information apparatus according to one of the preceding claims, **characterized by** a warning apparatus (2, 11) for outputting an audible and/or visual warning together with the change of scale.

7. Driver information apparatus according to one of the preceding claims, **characterized in that** the display unit (2) is designed to display the current vehicle position (42) and the direction of travel (43) in relation to the traffic route profile.

## Revendications

1. Dispositif d'information du conducteur (1) comprenant une unité d'affichage (2) pour afficher une carte des voies de circulation (4, 40, 40', 46) à différentes échelles, comprenant une unité de localisation (10) pour déterminer la position actuelle du véhicule et comprenant une unité de calcul (7) pour sélectionner une échelle de la carte des voies de circulation (4, 40, 40', 46) représentée dans l'unité d'affichage (2) et pour surveiller un tracé des voies de circulation qui se trouve à l'avant du véhicule à partir de la position actuelle du véhicule (42), **caractérisé en ce que** le tracé des voies de circulation est surveillé par l'unité de calcul de telle sorte que l'unité de calcul (7) produit une représentation de la carte (40', 46) dans l'unité d'affichage (2) grossie par rapport à une échelle réglée lorsqu'un virage (45) du tracé des voies de circulation qui se trouve devant le véhicule n'est pas reconnaissable avec l'échelle réglée et/ou lorsque le virage dépasse un angle de virage prédéfini.

2. Dispositif d'information du conducteur selon la revendication 1, **caractérisé en ce qu'**après avoir franchi le virage (45), la carte est de nouveau affichée à l'échelle réglée précédemment.

3. Dispositif d'information du conducteur selon la revendication 1, **caractérisé en ce que** la représentation de la carte (46) à l'échelle grossie est incrustée dans la représentation de la carte (40) ou à côté de la représentation de la carte (40) avec l'échelle réglée au moins pendant la durée du franchissement du virage.

4. Dispositif d'information du conducteur selon l'une des revendications 1-2, **caractérisé en ce que** la représentation de la carte (40', 46) grossie est représentée dans une unité d'affichage supplémentaire (15) en complément à l'unité d'affichage (2).

5. Dispositif d'information du conducteur selon l'une des revendications précédentes, **caractérisé par** une mémoire de données de cartes (8) contenant des données de cartes routières, le tracé des voies de circulation étant enregistré au moins sous la forme de vecteurs.

6. Dispositif d'information du conducteur selon l'une des revendications précédentes, **caractérisé par** un dispositif d'alerte (2, 11) pour délivrer un avertissement sonore et/ou visuel conjointement avec le changement d'échelle.

7. Dispositif d'information du conducteur selon l'une des revendications précédentes, **caractérisé en ce que** l'unité d'affichage (2) est configurée pour afficher la position actuelle du véhicule (42) et le sens de déplacement (43) en référence au tracé des voies de circulation.
